(19) Europäisches Patentamt
European Patent Office
Office européen des brevets

(11) **EP 3 029 080 A1**

(12) **EUROPEAN PATENT APPLICATION**
published in accordance with Art. 153(4) EPC

(43) Date of publication:
**08.06.2016 Bulletin 2016/23**

(21) Application number: **14831539.3**

(22) Date of filing: **27.06.2014**

(51) Int Cl.:
*C08F 265/02* (2006.01)     *C08F 261/04* (2006.01)
*C08F 220/58* (2006.01)

(86) International application number:
**PCT/CN2014/080963**

(87) International publication number:
**WO 2015/014188 (05.02.2015 Gazette 2015/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.07.2013 CN 201310329272**

(71) Applicant: **Soochow University**
**Jiangsu 215123 (CN)**

(72) Inventors:
• **YANG, Zhanshan**
**Suzhou**
**Jiangsu 215123 (CN)**
• **LU, Zukun**
**Suzhou**
**Jiangsu 215123 (CN)**

• **LI, Li**
**Suzhou**
**Jiangsu 215123 (CN)**
• **YUE, Ling**
**Suzhou**
**Jiangsu 215123 (CN)**
• **YANG, Shuqin**
**Suzhou**
**Jiangsu 215123 (CN)**
• **ZHU, Nankang**
**Suzhou**
**Jiangsu 215123 (CN)**

(74) Representative: **Tappe, Udo**
**zacco Dr. Peters & Partner**
**Am Wall 187-189**
**28195 Bremen (DE)**

(54) **SUPER ABSORBENT RESIN WITH HIGH SOLUTION ABSORBING RATE AND PREPARATION METHOD THEREFOR**

(57)     Super absorbent resin with a high solution absorbing rate and a preparation method therefor. In the method, by mass percent, 2%-10% polyvinyl alcohol whose polymerization degree is 1700-2400, 18%-26% sodium polyacrylate whose molecular weight is $2\text{-}5\times10^3$, 3%-9% 2-acrylamide-2-methylpro panesulfonic acid, and 55%-77% water are first mixed, to obtain a polymer and a monomeric aqueous mixture solution; and then, the polymer and the solution are irradiated and crosslinked by an electron beam and are then grafted to synthesize polymer gel, the gel is swelled and immersed by preferably using a dipping solution, and is frozen and lyophilized, to obtain super absorbent resin. The super absorbent resin reaches the international level in the pH value, the normal saline solution swallow, and the centrifugal solution preserving capability, and especially, has significant advantages in the solution absorbing rate and swallow of water distilled three times; in addition, has a simple process, is desirable in biocompatibility, and can be safely used. Therefore, the super absorbent resin can be applied in the fields of medical and hygienical products such as diapers and women sanitary towels, petrochemical engineering, and water and moisture preserving in agriculture and forestry, and therefore has great application and development values.

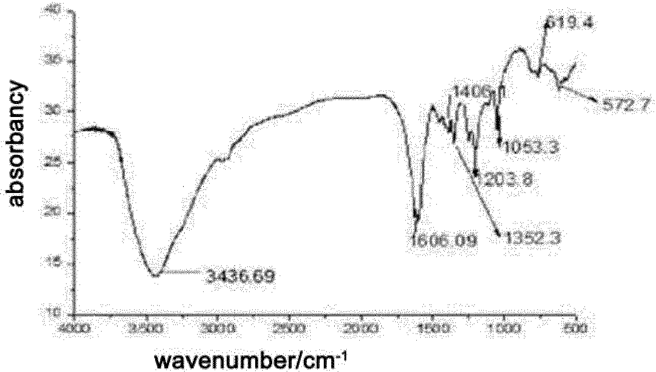

EP 3 029 080 A1

**Fig. 3**

**Description**

The present application claims priority based on the Chinese patent application No. 201310329272.1 for the invention entitled "SUPER ABSORBENT RESIN WITH HIGH SOLUTION ABSORBING RATE AND PREPARATION METHOD THEREFOR" filed with the SIPO on July 31, 2013, and all contents of the Chinese patent application is incorporated into the present application by reference.

**FIELD OF THE INVENTION**

The present invention relates to the technical field of functional polymer materials, especially relates to a super absorbent resin having high solution absorbing rate and preparation method therefor.

**BACKGROUND OF THE INVENTION**

Super absorbent resin (i.e., SAR) is a novel high polymer, containing strongly hydrophilic groups and having a three-dimensional network structure, which is developed fast in recent years. It can absorb a large amount of water rapidly and expand into a gel-like resin, and it has high water absorption and water retention. SAR has been developed for more than 60 years, and Japan, the USA and other countries have developed a variety of SARs successfully in succession. Sanyo Kasei Co., Ltd., Japan, performed the earliest research on SAR in the world, and produced SAR first in the world in 1978. Currently, SAR produced by San-Dia polymers, Ltd., Japan, accounts for about 55% of the global production. China is becoming a large emerging market for international SAR, but the research and development, the product performance and the production capacity of SAR in China are still at a backward level. Raw materials for SAR are mainly divided into two kinds: one is natural material, such as starch, alginate, protein and chitosan; and the other is petrochemical polymer materials, such as polyethylene oxide, polyvinyl alcohol, polyethylene, polystyrene and polyurethane. Research on grafting acrylic acid or salts thereof with other polymeric materials is most reported in the literature. SAR have been widely used in medical hygiene, industry, agriculture and forestry, daily life, and many other fields, where medical and hygienical products such as urinary incontinence mattress, diapers for infants, and women sanitary towels account for 70% or more of the total in the market. However, salt resistance, solution absorbing rate and biocompatibility of SAR still need to be improved, which is the focus and difficulty of international research on SAR currently. For example, side leakage of liquids such as urine or menstrual blood often occurs in use of diapers for infants and women sanitary towels due to low solution absorbing capacity, especially, low solution absorbing rate, and the sanitary products have to be changed at least once at night; moisture retaining function and pressurized moisture retaining function of SAR are weak, and thus liquid often soaks cloths and quilts through the sanitary materials; and some monomers of polymers have irritative effect, allergenicity, toxicity or potential toxicity to skin and cells, i.e. low safety and biocompatibility.

**DESCRIPTION OF THE INVENTION**

In view of the above, an object of the present invention is to provide an SAR having high solution absorbing rate. It has significantly superior solution absorbing rate and capacity to those of international famous SAR products. Moreover, it has good biocompatibility, and can be used safely.

To achieve the above object, the present invention provides an SAR having high solution absorbing rate, which is a copolymer formed from an aqueous solution of a mixture of polymer(s) and monomer(s) by irradiation crosslinking and grafting; and

the aqueous solution of a mixture of polymer(s) and monomer(s) comprises, in mass percentage:

2-10wt% of polyvinyl alcohol;
18-26wt% of sodium polyacrylate;
3-9wt% of 2-acrylamido-2-methylpropanesulfonic acid, and
55-77wt% of water;
wherein the polyvinyl alcohol has a polymerization degree of 1700-2400; and
the sodium polyacrylate has a molecular weight of $2 \times 10^3$ - $5 \times 10^3$.

The present invention also provides the following technical solutions:

An SAR having high solution absorbing rate according to the present invention is a PVA/PAAS/AMPS copolymer prepared from an aqueous solution of a mixture of polymer(s) and monomer(s) comprising, in mass percentage, 2 wt%-10 wt% of polyvinyl alcohol (i.e., PVA), 18 wt%-26 wt% of sodium polyacrylate (i.e., PAAS), and 3 wt%-9 wt% of 2-acrylamido-2-methylpropanesulfonic acid (i.e., AMPS), by dissolving under heating, and irradiation crosslinking and grafting, wherein the PVA has a polymerization degree of 1700 to 2400, and the PAAS has a molecular weight of $2 \times 10^3$-$5 \times 10^3$.

Preferably, the aqueous solution of a mixture of polymer(s) and monomer(s) comprises:

2 wt% of polyvinyl alcohol;
26 wt% of sodium polyacrylate;
9 wt% of 2-acrylamido-2-methylpropanesulfonic acid, and
63 wt% of water.

Preferably, the SAR is a copolymer prepared from an aqueous solution of a mixture of polymer(s) and monomer(s) comprising, in mass percentage, 2 wt% of PVA, 26 wt% of PAAS and 9 wt% of AMPS by irradiation crosslinking and grafting.

The present invention provides a method of preparing the aforementioned SAR having high solution absorbing rate, comprising the following steps:

A) mixing polyvinyl alcohol, sodium polyacrylate, 2-acrylamido-2-methylpropanesulfonic acid and water according to the above mass percentage to obtain an aqueous solution of a mixture of polymer(s) and monomer(s); and
B) irradiating the aqueous solution of a mixture of polymer(s) and monomer(s) with an electron beam for crosslinking and grafting to give a gel-like copolymer.

Preferably, the following step is further comprised:

C) subjecting the gel-like copolymer to oven drying, pulverization, sieving, immersion cleaning, swelling, freezing and lyophilization in sequence to obtain an SAR product.

The oven drying refers to a step wherein the gel-like copolymer is placed in an electric oven, and dried at 40°C to 50°C for 24-48 h to obtain a dried gel;

The pulverization refers to a step wherein the dried gel is placed in a pulverizer, and pulverized at a rotation speed of 2500 to 3000 r/min for 25 to 30s to obtain particles;

The sieving refers to a step wherein the particles are sieved with an oscillating sieving machine to obtain 40 to 100 mesh resin particles.

Preferably, in the step C), the immersion cleaning and the swelling are in a step wherein the resin particles are placed in an immersion solution to perform room-temperature immersion cleaning and swelling for 6-8 h to obtain swelled resin particles; and

the mass ratio of the resin particles to the immersion solution is 1:30 to 1:40.

Preferably, the immersion solution consists of methanol and triply distilled water (i.e. distilled three times) at a mass ratio of 1:9 to 7:3.

Preferably, in the step C), the freezing refers to filtering off redundant liquid from the swelled resin particles, freezing the resin particles at -100°C to -80°C in a low-temperature refrigerator for 2-3 h to obtain frozen resin particles; and the lyophilization refers to lyophilizing the frozen resin particles under vacuum using a lyophilizer for 48 to 72 h, with a cold well temperature of -60°C to -50°C to obtain an SAR product.

Preferably, in the step A), the materials are placed in an autoclave after mixing, heated to 110°C to 120°C, and kept for 1 to 2 h for dissolving to obtain an aqueous solution of a mixture of polymer(s) and monomer(s).

Preferably, in the step B), the aqueous solution of a mixture of polymer(s) and monomer(s) is quantitatively poured into a smooth plate-like mold prior to crosslinking and grafting, with thickness of the solution at 1 to 15 mm.

Preferably, during crosslinking and grafting in the step B), the energy for the electron beam irradiation is 0.8 to 2.45 MeV, the current is 2 to 14 mA, and the total absorbed dose is 30 to 60 kGy.

The present invention also provides a method of preparing the above SAR having high solution absorbing rate, particularly comprising the following steps:

(1) material preparation: PVA/PAAS/AMPS and triply distilled water are mixed uniformly according to mass percent, placed in an autoclave, heated to 110°C to 120°C and kept for 1 to 2 h for dissolving to give a uniform and transparent mixture solution;
(2) mold injection: the mixture solution obtained from step (1) is poured quantitatively to a smooth plate-like mold, such that the solution has a thickness of 1 to 15 mm;
(3) electron beam irradiation and gelation: the solution in mold is irradiated using an electron beam with energy of 0.8 to 2.45 MeV, a current of 2 to 14 mA and a total absorbed dose of 30 to 60 kGy for crosslinking and grafting, to synthesize a gel-like PVA/PAAS/AMPS copolymer;

(4) oven drying, pulverization and sieving: the gel-like copolymer synthesized in step (3) is placed in an electric oven, and dried at 40°C to 50°C for 24 to 48 h to obtain a dried gel; then the obtained dried gel is placed in a pulverizer, pulverized at a rotation speed of 2500 to 3000 r/min for 25 to 30 s, sieved with an oscillating sieving machine to obtain 40 to 100 mesh resin particles;

(5) immersion cleaning and swelling: resin particles is placed into an immersion solution in which the mass ratio of the resin particles to the immersion solution is 1:30 to 1:40, and room-temperature immersion cleaning and swelling are performed for 6 to 8 h;

(6) freezing and lyophilization: the immersed and swelled resin particles are filtered to remove redundant liquid, frozen at -100°C to -80°C in a low-temperature refrigerator for 2-3 h, and then lyophilized under vacuum using a lyophilizer for 48 to 72 h, with a cold well temperature of -60°C to -50°C to obtain a PVA/PAAS/AMPS SAR product.

In step (1) of the above technical solution, the ratio by mass of PVA/PAAS/AMPS to triply distilled water is 2-10 wt%:18-26 wt%:3-9 wt%:55-77 wt%.

Preferably, the ratio by mass of PVA/PAAS/AMPS to triply distilled water is 2 wt%:26 wt%:9 wt%:63 wt%.

In step (2) of the above technical solution, the mold is made of aluminum alloy or glass.

In step (5) of the above technical solution, the immersion solution consists of methanol and triply distilled water.

Preferably, in step (5), mass ratio of methanol to triply distilled water in the immersion solution is 1:9 to 7:3.

Further, the mass ratio of methanol to triply distilled water in the immersion solution is 5:5.

Due to application of the above technical solution, the present invention has the following advantages over the prior art:

The SAR of the present invention is comparable with international famous products (such as the SAR products produced by Sanyo Kasei, Japan) in the pH value, the normal saline solution absorption, and the centrifugal solution retention capability, and is significantly superior to famous SAR products both in and out of China in the triply distilled water absorption capacity and absorption rate (P<0.01), being at the advanced level in the world; the SAR of the present invention has no acute toxicity, cytotoxicity, allergenicity or skin irritation, has good biocompatibility, and can be safely used. Therefore, the SAR can be widely applied in the fields of medical and hygienical products such as diapers for infants and women sanitary towels, and water and moisture retention in agriculture and forestry, and therefore has great application and development values.

DESCRIPTIONS OF THE DRAWINGS

For better illustration of the technical solutions in the examples of the present invention, the drawings for depiction of the examples are introduced briefly below. Apparently, the drawings related to the present invention in the following description are merely some examples of the present invention. Based on these drawings, a person skilled in the art may also obtain other embodiments without creative work.

Figure 1 is an SEM photograph of SAR that is not subjected to a post-treatment process;
Figure 2 is an SEM photograph of SAR that is subjected to a post-treatment process;
Figure 3 is the IR spectrum of the SAR;
Figure 4 is a curve showing the effects of PAAS content on the swelling degree of the gel-like polymer;
Figure 5 is a curve showing the effects of PVA content on the swelling degree of the gel-like polymer;
Figure 6 is a curve showing the effects of AMPS content on the swelling degree of the gel-like polymer;
Figure 7 is an SEM photograph of the SAR of Example 4 that is not subjected to post-treatment processes.
Figure 8 is an SEM photograph of the SAR of Example 4 that is subjected to post-treatment processes.

**EMBODIMENTS**

The technical solutions of the embodiments of the present invention are described in details below in combination with the drawings in the examples of the present invention. Apparently, the examples described are merely part of embodiments of the present invention rather than all of embodiments. All other embodiments, obtainable by one of ordinary skill in the art based on the embodiments of the present invention without creative work, fall within the protection scope covered by the present application.

The present invention provides an SAR having high solution absorbing rate, which is a copolymer formed from an aqueous solution of a mixture of polymer(s) and monomer(s) by irradiation crosslinking and grafting; and the aqueous solution of a mixture of polymer(s) and monomer(s) comprises, in mass percentage :

2-10wt% of polyvinyl alcohol;

18-26wt% of sodium polyacrylate;

3-9wt% of 2-acrylamido-2-methylpropanesulfonic acid, and

55-77wt% of water;

wherein the polyvinyl alcohol has a polymerization degree of 1700-2400; and

the sodium polyacrylate has a molecular weight of $2 \times 10^3$ $5 \times 10^3$.

The present invention synthesizes a new PVA/PAAS/AMPS copolymer by electron beam irradiation crosslinking and grafting. The copolymer which has been subjected to post-treatment processes has a very high solution absorbing rate which is beneficial to application as an SAR.

In the present invention, the aqueous solution of a mixture of polymer(s) and monomer(s) comprises, in mass percentage, 2 wt%-10 wt% of polyvinyl alcohol, preferably 2 wt%-6 wt% of polyvinyl alcohol, and more preferably 2 wt% of polyvinyl alcohol. Polyvinyl alcohol (i.e., PVA) is useful as a raw material of SAR due to its structural features. The PVA has a polymerization degree of 1700 to 2400, a saponification degree generally at 98% or above. A PVA of chemically pure grade or above is applicable to the invention.

The aqueous solution of a mixture of polymer(s) and monomer(s) comprises, in mass percentage, 18 wt%-26 wt% of sodium polyacrylate, preferably 22 wt%-26wt% of sodium polyacrylate, and more preferably 26 wt% of sodium polyacrylate. Sodium polyacrylate (i.e., PAAS), one of the raw materials for copolymerization according to the invention, contains strongly hydrophilic, ionic-type sodium carboxylate group (-COONa), and has strong water solubility. The PAAS has a molecular weight of $2 \times 10^3$ -$5 \times 10^3$, preferably $3 \times 10^3$ -$5 \times 10^3$ . Analytically pure PAAS is applicable.

The aqueous solution of a mixture of polymer(s) and monomer(s) comprises, in mass percentage, 3 wt%-9 wt% of 2-acrylamido-2-methylpropanesulfonic acid, preferably 6 wt%-9 wt% of 2-acrylamido-2-methylpropanesulfonic acid, more preferably 9 wt% of 2-acrylamido-2-methylpropanesulfonic acid. 2-Acrylamido-2-methylpropanesulfonic acid (i.e., AMPS) is a compound formed by substituting a hydrogen atom in the amido group of an acrylamide molecule with an alkylsulfonic acid molecule, and contains hydrophilic, strongly anionic sulfonic acid group ($-SO_3-$). AMPS together with the aforementioned polymeric raw materials forms the aqueous solution of a mixture of polymer(s) and monomer(s) of the present invention, and it tends to bind to PAAS having high water solubility, so as to form a three-dimensional network structure of SAR. Chemically pure AMPS is applicable to the present invention.

In addition to the above polymers and the monomer, the aqueous solution of a mixture of polymer(s) and monomer(s) comprises, in mass percentage, 55 wt%-77wt% of water, preferably 63 wt%-70wt% of water, more preferably 63 wt%-65 wt% of water, and most preferably 63 wt% of water. In the present invention, triply distilled water is preferred.

In an embodiment of the present invention, the aqueous solution of a mixture of polymer(s) and monomer(s) comprising 2 wt% of PVA, 26 wt% of PAAS, 9 wt% of AMPS and 63 wt% of triply distilled water achieves the best effect.

In the present invention, the aqueous solution of a mixture of polymer(s) and monomer(s) is subjected to irradiation crosslinking and grafting to give a PVA/PAAS/AMPS copolymer, which then undergoes post-treatment processes to form a resin having very good solution absorption and solution retention.

Correspondingly, the present invention provides a method of preparing an SAR having high solution absorbing rate as stated above, comprising the following steps:

A) mixing polyvinyl alcohol, sodium polyacrylate, 2-acrylamido-2-methylpropanesulfonic acid and water according to the mass percentage stated above to obtain an aqueous solution of a mixture of polymer(s) and monomer(s); and

B) irradiating the aqueous solution of a mixture of polymer(s) and monomer(s) with an electron beam for crosslinking and grafting to give a gel-like copolymer.

In an embodiment of the present invention, materials are prepared by first mixing PVA, PAAM, AMPS and water uniformly. The amounts of the PVA, PAAM, AMPS and water are as stated above, and are not repeated here.

After mixing, it is preferred in the present invention to place the above mixture solution in an autoclave and to dissolve by heating so as to form a uniform and transparent solution, where the temperature for heating and dissolving is preferably 110°C to 120°C, and the time is preferably 1 to 2 h, thereby obtaining an aqueous solution of a mixture of polymer(s) and monomer(s).

The resultant aqueous solution of a mixture of polymer(s) and monomer(s) is irradiated with an electron accelerator in an embodiment of the present invention, and is crosslinked and grafted by electron beam irradiation to synthesize a new gel-like PVA/PAAS/AMPS copolymer.

Prior to crosslinking and grafting, it is preferred in the present invention to quantitatively pour the aqueous solution of a mixture of polymer(s) and monomer(s) to a smooth plate-like mold so as to complete mold injection, wherein the mold is preferably made of alumina alloy or glass, and size of the mold may be determined dependent on electron beam irradiation width. In the mold, the solution has a thickness of preferably 1 to 15 mm, more preferably 8 to 15 mm.

After mold injection is finished, the solution in the mold is irradiated with electron beam using an electron accelerator to synthesize a gel-like copolymer in an embodiment of the present invention.

When the present invention carries out crosslinking and grafting by irradiation with an electron accelerator, the irradiation conditions include: the energy of the electron beam irradiation being preferably 0.8 to 2.45 MeV, and more preferably 1.5 to 2.0 MeV; the current being preferably 2 to 14 mA, and more preferably 9 to 13 mA; and the total absorbed dose being preferably 30 to 60 kGy, and more preferably 40 to 50 KGy.

After the gel-like copolymer is obtained, the present invention preferably further comprises the following steps: subjecting the gel-like copolymer to oven drying, pulverization, sieving, immersion cleaning, swelling, freezing and lyophilization in sequence, so as to obtain a lyophilized SAR product.

In the present invention, steps such as oven drying, immersion cleaning, freezing and lyophilization, though belonging to post-irradiation treatment processes, may also have significant influence on the solution absorbing performance of SAR.

Specifically, the oven drying refers to a step wherein the gel-like copolymer is placed in an electric oven, and dried at 40°C to 50°C for 24-48 h to obtain a dried gel;

The pulverization refers to a step wherein the dried gel is placed in a pulverizer, and pulverized at a rotation speed of 2500 to 3000 r/min for 25 to 30s to obtain particles;

The sieving refers to a step wherein the particles are sieved with an oscillating sieving machine to obtain 40 to 100 mesh resin particles.

The uncrosslinked monomers in SAR may also have a great influence on performance and biocompatibility of the SAR. In an embodiment of the present invention, the resultant resin particles are immersed and swelled in an immersion solution to obtain swelled resin particles.

Specifically, the immersion cleaning and swelling includes placing the resin particles in an immersion solution to perform room-temperature immersion cleaning and swelling, so as to obtain swelled resin particles. In the immersion cleaning and swelling, the mass ratio of the resin particles to the immersion solution is preferably 1:30 to 1:40. The time for the immersion cleaning and swelling is preferably 6 h to 8 h such that uncrosslinked monomers can be removed and resin particles are fully swelled.

In the present invention, the immersion solution preferably consists of methanol and triply distilled water. The immersion solution has both effects of removing uncrosslinked monomers in the resin and swelling the resin. Mass ratio of the methanol to triply distilled water is preferably 1:9 to 7:3, which achieves good effect.

In an embodiment of the present invention, the obtained swelled resin particles is frozen and lyophilized to obtain lyophilized SAR product, and packaged in a moistureproof manner for use.

Freezing and lyophilization may significantly improve the solution absorbing performance of SAR. In particular, the freezing refers to filtering off redundant liquid from the swelled resin particles, freezing at -100°C to -80°C in a low-temperature refrigerator for 2-3 h to obtain frozen resin particles.

The lyophilization refers to lyophilizing the frozen resin particles under vacuum using a lyophilizer for 48 to 72 h, with a cold well temperature of -60°C to -50°C to obtain lyophilized SAR product.

Physical and chemical properties of the obtained SAR product of the present invention are tested. The morphology, water content, fine structure, molecular structure, pH value, swelling degree and absorbing ratio in triply distilled water, swelling degree and absorbing ratio in normal saline solution, centrifugal solution retention capability, absorbing rate, etc. of the obtained SAR product are tested according to the ISO17910-2001 standard. And the biocompatibility of the SAR is tested according to the ISO10993-5(2009) standard.

The results show that the PVA/PAAS/AMPS SAR of the present invention is significantly superior to the famous SAR products in China in both solution absorbing rate and absorption capacity in triply distilled water, being at the advanced level in the world. Moreover, the SAR of the present invention is also at the advanced level in the world in terms of the pH value, swelling degree in normal saline solution and centrifugal solution retention capability. In addition, the SAR of the present invention has no acute toxicity, cytotoxicity, allergenicity or skin irritation, has good biocompatibility, and can be safely used.

The preparation method for SAR of the present invention is simple in process and easy to be implemented.

The SAR having high solution absorbing rate and the preparation method thereof provided according to the present invention are illustrated particularly in combination with the drawings and examples below.

### Example 1

Preparation of irradiated PVA/PAAS/AMPS copolymer:

(1) PVA is chemically pure, and has a polymerization degree of 1700 and a saponification degree of 98%; PAAS is analytically pure, and has a molecular weight of $5\times10^3$ ; and AMMS is chemically pure, and has a molecular weight of 207.25.

Material preparation: PVA accounts for 6 wt%, PAAS accounts for 18 wt%, AMPS accounts for 6 wt%, and triply distilled water accounts for 70 wt%.

The above mixture solution is mixed uniformly, placed in an autoclave, heated to 110°C and dissolved for 2 h to obtain a uniform and transparent solution.

(2) The uniform solution is poured quantitatively into a smooth plate-like mold with thickness of the solution at 1 mm. The mold is made of aluminum alloy, and its size is determined dependent on electron beam irradiation width.

(3) The solution in mold is irradiated with an electron accelerator under following conditions: energy of 0.8 MeV, a current of 2 mA, and a total absorbed dose of 30 kGy. By crosslinking and grafting under electron beam irradiation, a new gel-like PVA/PAAS/AMPS copolymer is synthesized.

Post-irradiation treatment processes and methods:

(4) drying, pulverizing and sieving:

The PVA/PAAS/AMPS copolymer synthesized under irradiation is placed in an electric oven, dried at 40°C for 48 h to obtain a dried gel. The dried gel is placed in a pulverizer, pulverized at a rotation speed of 2500 r/min for 30 s, and sieved with an oscillating sieving machine to obtain 40 to 100 mesh resin particles.

(5) immersion cleaning and swelling: an immersion solution consisting of methanol and triply distilled water at a mass ratio of 7:3 is prepared. Resin particles is placed in the immersion solution with mass ratio of the resin particles to the immersion solution at 1:30, immersed and swelled at room temperature for 8 h so as to remove uncrosslinked monomers and fully swell the resin particles.

(6) freezing and lyophilization: the immersed and swelled resin particles is filtered to remove redundant liquid, frozen at -80°C in a low-temperature refrigerator for 2 h, and then lyophilized under vacuum using a lyophilizer for 72 h, with a cold well temperature of -50°C to obtain a PVA/PAAS/AMPS SAR product. The product is packaged in a moisture-proof manner for use.

**Example 2**

Preparation of irradiated PVA/PAAS/AMPS copolymer:

(1) PVA is chemically pure, and has a polymerization degree of 2400 and a saponification degree of 99%; PAAS is analytically pure, and has a molecular weight of $2 \times 10^3$; and AMMS is chemically pure, and has a molecular weight of 207.25

Material preparation: PVA accounts for 10 wt%, PAAS accounts for 22 wt%, AMPS accounts for 3 wt%, and triply distilled water accounts for 65 wt%.

The above mixture solution is mixed uniformly, placed in an autoclave, heated to 120°C and dissolved for 1 h to obtain a uniform and transparent solution.

(2) The uniform solution is poured quantitatively into a smooth plate-like mold with thickness of the solution at 15 mm. The mold is made of aluminum alloy, and its size is determined dependent on electron beam irradiation width.

(3) The solution in mold is irradiated with an electron accelerator under following conditions: energy of 2.45 MeV, a current of 14 mA, and a total absorbed dose of 60 kGy. By crosslinking and grafting under electron beam irradiation, a new gel-like PVA/PAAS/AMPS copolymer is synthesized.

Post-irradiation treatment processes and methods:

(4) drying, pulverizing and sieving:

The PVA/PAAS/AMPS copolymer synthesized under irradiation is placed in an electric oven, dried at 50°C for 24 h to obtain a dried gel. The dried gel is placed in a pulverizer, pulverized at a rotation speed of 3000 r/min for 25 s, and sieved with an oscillating sieving machine to obtain 40 to 100 mesh resin particles.

(5) immersion cleaning and swelling: an immersion solution consisting of methanol and triply distilled water at a mass ratio of 1:9 is prepared. Resin particles is placed in the immersion solution with mass ratio of the resin particles to the immersion solution at 1:40, immersed and swelled at room temperature for 8 h so as to remove uncrosslinked monomers and fully swell the resin particles.

(6) freezing and lyophilization: the immersed and swelled resin particles is filtered to remove redundant liquid, frozen at -100°C in a low-temperature refrigerator for 2 h, and then lyophilized under vacuum using a lyophilizer for 48 h, with a cold well temperature of -60°C to obtain a PVA/PAAS/AMPS SAR product. The product is packaged in a moisture-proof manner for use.

**Example 3**

Preparation of irradiated PVA/PAAS/AMPS copolymer:

(1) PVA is chemically pure, and has a polymerization degree of 1700 and a saponification degree of 99%; PAAS is analytically pure, and has a molecular weight of $3\times10^3$ ; and AMMS is chemically pure, and has a molecular weight of 207.25

Material preparation: PVA accounts for 2 wt%, PAAS accounts for 26 wt%, AMPS accounts for 9 wt%, and triply distilled water accounts for 63 wt%.

The above mixture solution is mixed uniformly, placed in an autoclave, heated to 120°C and dissolved for 2 h to obtain a uniform and transparent solution.

(2) The uniform solution is poured quantitatively into a smooth plate-like mold with thickness of the solution at 8 mm. The mold is made of aluminum alloy, and its size is determined dependent on electron beam irradiation width.

(3) The solution in mold is irradiated with an electron accelerator under following conditions: energy of 1.5 MeV, a current of 9 mA, and a total absorbed dose of 50 kGy. By crosslinking and grafting under electron beam irradiation, a new gel-like PVA/PAAS/AMPS copolymer is synthesized.

Post-irradiation treatment processes and methods:

(4) drying, pulverizing and sieving:

The PVA/PAAS/AMPS copolymer synthesized under irradiation is placed in an electric oven, dried at 45°C for 36 h to obtain a dried gel. The dried gel is placed in a pulverizer, pulverized at a rotation speed of 2800 r/min for 28 s, and sieved with an oscillating sieving machine to obtain 40 to 100 mesh resin particles.

(5) immersion cleaning and swelling: an immersion solution consisting of methanol and triply distilled water at a mass ratio of 5:5 is prepared. Resin particles is placed in the immersion solution with mass ratio of the resin particles to the immersion solution at 1:35, immersed and swelled at room temperature for 7 h so as to remove uncrosslinked monomers and fully swell the resin particles.

(6) freezing and lyophilization: the immersed and swelled resin particles is filtered to remove redundant liquid, frozen at -90°C in a low-temperature refrigerator for 2.5 h, and then lyophilized under vacuum using a lyophilizer for 60 h, with a cold well temperature of -55°C to obtain a PVA/PAAS/AMPS SAR product. The product is packaged in a moisture-proof manner for use.

Method for detecting physical and chemical properties of PVA/PAAS/AMPS SAR

**1**. Detection of physical and chemical properties of SAR

Physical and chemical properties of the SAR product prepared by the inventors and of famous SAR product in and out of China are detected with reference to the standard of ISO17910-2001.

**1.1** Observation of morphology and water content of SAR

Morphology, texture, color, water content and the like of SAR are observed.

**1.2** Observation of fine structure of SAR

Fine structure of SAR is observed using Scanning Electron Microscope (SEM).

**1.3** Infrared spectrum analysis of SAR

Potassium bromide tabletting method is applied. 2 mg of SAR and 300 mg KBr powder are ground and mixed uniformly in an agate mortar, and tabletted on a tabletting machine to obtain a transparent thin tablet, which is then placed in a FT-IR spectrometer to detect molecule of the SAR. **1.4** Detection of pH value

Preparation of buffer solutions: NaOH solution (pH=7.0$\pm$0.02) and HCl solution (pH=4.0$\pm$0.02).

A pH electrode is inserted into the buffer solutions for correction. 0.5 g of SAR is placed into a beaker containing 100 ml of normal saline solution, the beaker is placed on a magnetic stirrer, and the solution is stirred at a medium speed for 10 min with an iron-cored PTFE stirrer having a diameter of 25 mm. After standing for 1 min, pH value of the supernatant is detected with a standard pH electrode.

**1.5** Detection of swelling degree in triply distilled water

5 samples cut from the gel copolymer synthesized under irradiation are placed in a constant-temperature drying oven, dried at 50°C to constant weight, and then weighed respectively to obtain a dried gel sample mass $M_1$. The samples are immersed in triply distilled water for 24 h to achieve full swelling balance, then taken out and weighed when there is no water drop falling down, to obtain a swelled gel sample mass M2. Swelling degree of the gel copolymer in triply distilled water is calculated according the following formula:

$$\text{Swelling degree in triply distilled water} = (M_2\text{-}M_1)/M_1 \times 100\%$$

**1.6** Detecting of swelling degree in normal saline solution

5 samples cut from the gel copolymer synthesized under irradiation are placed in a constant-temperature drying oven, dried at 50°C to constant weight, and then weighed respectively to obtain a dried gel sample mass $M_1$. The samples are immersed in normal saline solution for 24 h to achieve full swelling balance, then taken out and weighed when there is no water drop falling down, to obtain a swelled gel sample mass $M_2$. Swelling degree of the gel copolymer in normal saline solution is calculated according the following formula:

$$\text{Swelling degree in normal saline solution} = (M_2\text{-}M_1)/M_1 \times 100\%$$

**1.7** Detection of solution absorbing ratio in triply distilled water

0.5 g SAR is weighed accurately (with an accuracy of 0.001), and placed into a beaker containing 500 g triply distilled water to fully absorb the water for 60 min so as to achieve swelling balance. The sample is filtered to remove the solution, allowed to stand for 10 min, and weighed to obtain a mass m. Solution absorbing ratio in triply distilled water is calculated according to formula: solution absorbing ratio in triply distilled water= (m-0.5)/0.5.

**1.8** Detection of solution absorbing ratio in normal saline solution

0.5 g SAR is weighed accurately (with an accuracy of 0.001), and placed into a beaker containing 500 g normal saline solution to fully absorb the solution for 60 min so as to achieve swelling balance. The sample is filtered to remove the solution, allowed to stand for 10 min, and weighed to obtain a mass m. Solution absorbing ratio in normal saline solution is calculated according to formula: solution absorbing ratio in normal saline solution = (m-0.5)/0.5.

**1.9** Detection of centrifugal solution retention capability

6 non-woven fabric bags identical in size (the size is 60 mm*60 mm) are made, wherein three are taken as sample bags, and the other three are blank bags. Each sample bag is filled with 0.2 g SAR, and heat-sealed. The sample bags and blank bags are placed in normal saline solution, and swelled for 30 min. Masses of the sample bags and blank bags are weighed, respectively, and the difference in mass between a sample bag and a blank bag is the mass of the swelled sample before centrifugation. The bags are centrifuged in a centrifuge at a rotation speed of 250 r/min for 3 min, respectively. Then the masses of the sample bags and blank bags are weighed, respectively, and the difference in mass between a sample bag and a blank bag is the mass of the swelled sample after centrifugation. Centrifugal solution retention capability is calculated according to formula: centrifugal solution retention capability = mass of swelled sample after centrifugation/mass of swelled sample before centrifugation.

**1.10** Detection of solution absorbing rate

Solution absorbing rate is detected by vortex method. 50 g normal saline solution is weighed and placed into a 100 ml beaker. The beaker is placed on a constant-temperature magnetic stirrer, and stirred with an iron-cored PTFE stirrer having a diameter of 25 mm. The stirrer is started to stir at 25°C, and 2.0 g SAR is added after vortex of solution in the beaker is observed. Meanwhile timing is started, and time t (s) is recorded when the vortex disappeared. The time t is the solution absorbing rate of SAR. A small time t represents a large solution absorbing rate.

**1.11** Statistical treatment

All experimental results are expressed with number average $\pm$ standard deviation ($\overline{X}\pm S$). The experimental data is analyzed statistically with SPSS19.0 statistical software package, and comparison among plural groups of number averages adopted variance analysis pairwise comparison SNK method, P<0.05 represents significant statistical difference, and P<0.01 represents very significant statistical difference.

**Experimental results**

**I**. Appearance and water content of SAR

The PVA/PAAS/AMPS SAR prepared by the inventor has an appearance of white compact solid particles, with a size of 40 to 100 mesh, a water content of $3.6\pm0.3\%$. The SAR becomes transparent gel-like particles after absorbing solution and swelling.

**II**. Observation of fine structure of SAR by SEM

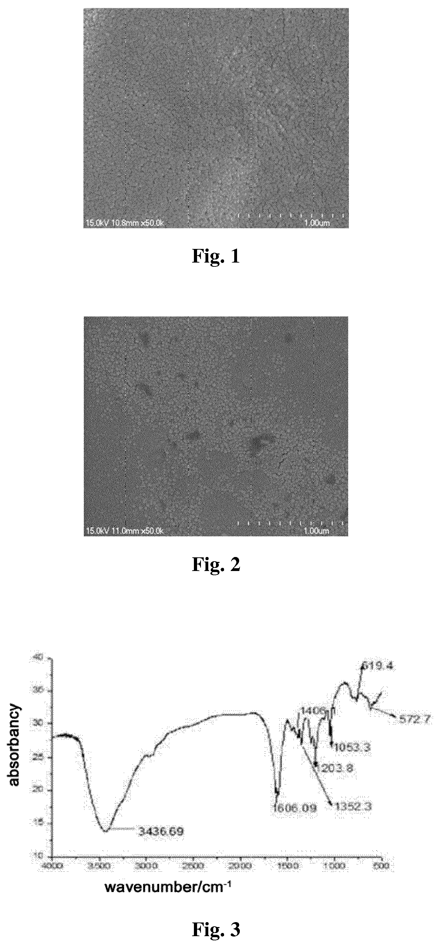

Effects of post-irradiation treatment processes on fine structure of PVA/PAAS/AMPS SAR is observed with SEM, and the results are show in figure 1 and figure 2. The spherical particles in figure 1 are distributed uniformly in a compact arrangement; the spherical particles in figure 2 are distributed uniformly (though not as uniformly as in figure 1) and in loose arrangement, and have many irregular pores varying in size. The results demonstrate that post-treatment processes, including e.g., immersing and swelling, and lyophilization, can loosen the three-dimensional network structure of the SAR.

**III**. Infrared spectrum analysis on SAR

The inventors analyzed and identified the molecules of PVA/PAAS/AMPS SAR by infrared spectrum analysis. Figure 3 shows that the N-H bond stretching vibration peak of AMPS amide appears at 3436.7/cm$^{-1}$, the symmetric stretching vibration peak of COO-Na of PAAS appears at 1406/cm$^{-1}$, the asymmetric stretching vibration peak of COO-Na appears at 1606.1/cm$^{-1}$, the stretching vibration peak of C-O of PVA appears in the vicinity of 1053.3/cm$^{-1}$, the peak at 1203.8/cm$^{-1}$ is assigned to the characteristic absorption peak of ester since a synthetic ester has a characteristic absorption $V_{C-O-C}$ at 1330-1150/cm$^{-1}$, and the characteristic absorption peak of sulfonic acid group appears in the vicinity of 619.4/cm$^{-1}$. The absorption peaks in the vicinity of 1352.3/cm$^{-1}$ are not characteristic absorption peaks of a molecular bond of materials used in the present experiment (PVA, PAAS and AMPS), but belong to a generally-called fingerprint region in infrared spectra. Namely, these peaks may be absorption peaks of new bonds in the copolymer that is formed from the materials used in the present experiment by irradiation crosslinking, and new bonds are usually formed in the fingerprint region. The results of infrared spectrum analysis show a new PVA/PAAS/AMPS copolymer is synthesized from the experimental materials by crosslinking and grafting under electron beam irradiation.

**IV.** Optimization of the ratio of materials of PVA/PAAS/AMPS copolymer

The inventors took the masses of PAAS, PVA and AMPS as investigating objects, and designed three-factor three-level orthogonal experiments. As such, the experimental results were of confidence while the sample amount used in experiment was reduced. Thus, it was beneficial to screening out optimal ratio of the three materials rapidly. 9 groups of gel-like PVA/PAAS/AMPS copolymer samples for the orthogonal experimental design were synthesized by irradiation, and swelling degree of these samples was detected. The results are listed in Table 1.

Table 1 Test results of swelling degree of 9 gel copolymers synthesized by irradiation (n=5, ($\overline{x}\pm s$)

| samples | PAAS(wt %) | PVA (wt %) | AMPS(wt %) | swelling degree in triply distilled water (%) | swelling degree in normal saline solution (%) |
|---|---|---|---|---|---|
| 1 | 26 | 2 | 9 | 37731.2$\pm$3869.0 | 4582.5$\pm$316.3 |
| 2 | 26 | 6 | 3 | 33882.3$\pm$2490.6** | 3224.7$\pm$161.0** |
| 3 | 26 | 10 | 6 | 22279.1$\pm$1768.8** | 2609.2$\pm$417.5** |
| 4 | 22 | 2 | 6 | 48850.8$\pm$4256.7** | 4081.1$\pm$298.4** |
| 5 | 22 | 6 | 9 | 35366.7$\pm$4301.5** | 3405.5$\pm$298.4** |

(continued)

| samples | PAAS(wt %) | PVA (wt %) | AMPS(wt %) | swelling degree in triply distilled water (%) | swelling degree in normal saline solution (%) |
|---|---|---|---|---|---|
| 6 | 22 | 10 | 3 | 18941.1±1736.9** | 2266.8±179.9** |
| 7 | 18 | 2 | 3 | 30144.5±8129.1** | 2968.2 ±577.8** |
| 8 | 18 | 6 | 6 | 31729.5±5242.5** | 2662.8 ±89.2** |
| 9 | 18 | 10 | 9 | 26125.8±2030.2** | 2045.9±200.8 ** |

Note: compared with the first group, *, $P<0.05$; **, $P<0.01$

The results in table 1 show that a series of gel copolymers with different swelling degrees are synthesized by electron beam irradiation. In consideration that SAR for use in medical and hygienical products mainly contacts and absorbs ionic-type body fluid such as urine and blood, we take swelling degree in normal saline solution as a standard for screening the optimal ratio of the materials constituting SAR. The swelling degree in normal saline solution of the samples of the first group is up to 4582.5±316.3%, and has very significant statistical difference ($P<0.01$) as compared with other samples. Therefore, optimal ratio of the materials constituting SAR, i.e. PAAS, PVA and AMPS, is 26:2:9 (wt%).

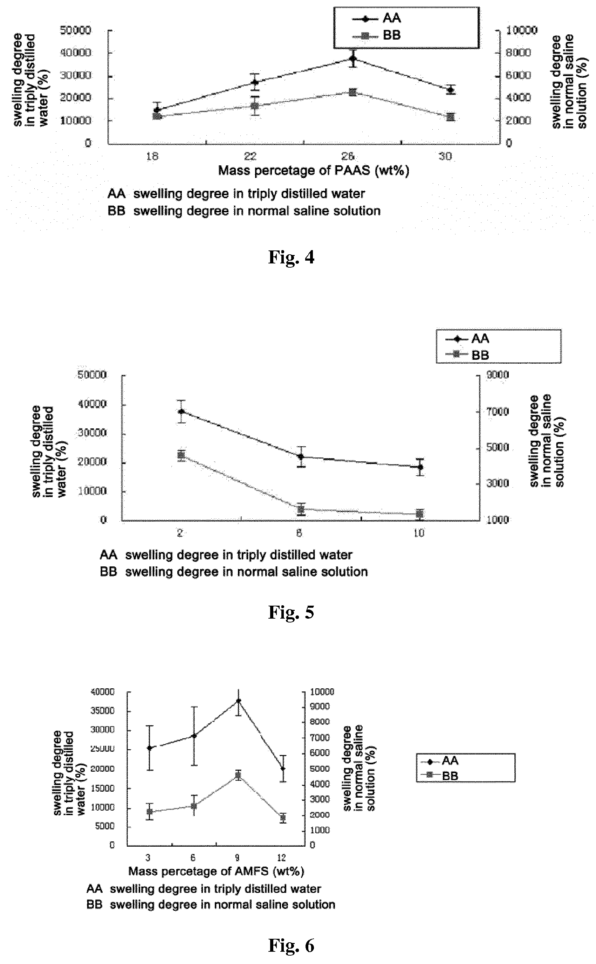

Figures 4, 5, and 6 shows the results of the study on the influence of amounts of each material on the swelling degree of the gel copolymer, based on the optimal ratio of PAAS, PVA and AMPS being 26:2:9 (wt%).

It can be seen from figures 4, 5, and 6, the swelling degree of the gel copolymer achieves a peak value when the amounts of PAAS, PVA and AMPS are 26 wt%, 2wt%, and 9 wt%, respectively, which also demonstrates that the optimal ratio of PAAS, PVA and AMPS is 26:2:9 (wt%).

It can be seen from figure 6, under a constant composition of 26 wt% PAAS and 2 wt% PVA, increasing AMPS within a certain dosage range can remarkably improve swelling degree of the gel copolymer, which demonstrates that AMPS is one of major factors influencing swelling degree of SAR, especially, swelling degree in normal saline solution.

The mechanism may be as follows: AMPS is a compound formed by substituting a hydrogen atom in the amido group of an acrylamide molecule with an alkylsulfonic acid molecule. It is prone to bind with PAAS having high water solubility and form a three-dimensional network structure of SAR. With increase of AMPS within a certain dosage range, solution absorbing property of the SAR increases, of which the mechanism is assumed to lie in two aspects: (1) since AMPS comprises hydrophilic and strongly-anionic sulfonic acid group ($-SO_3-$), the amount of highly-hydrophilic groups contained in the three-dimensional network structure increases greatly with the increase of the amount of AMPS, the degree of ionization of the polymer increases, and the number of anions at the crosspoints of the three-dimensional network also increases during absorbing of the solution. As a result, osmotic pressure in the network increases, and solution absorbing performance also increases. (2) Since PAAS in the SAR system comprises strongly-hydrophilic and ionic-type sodium carboxylate group ($-COONa$), non-ionic type amido ($-CHNH_2$) in the resin system increases with the increase in amount of AMPS; $-CONH_2$ and $-COONa$ probably generate a synergic effect, which weakens the coions effect and the salt effect, reduces the sensitivity of the resin system to salt concentration of the solution system, and improves the capability of SAR to absorb normal saline solution and ammonia.

**V**. Effects of the post-irradiation treatment processes on solution absorbing performance of SAR

1. The uncrosslinked monomers in SAR may have great influence on the performance and biocompatibility of SAR. Hence, the inventors develop, for the first time in the world, an immersion solution consisting of methanol and triply distilled water, and the immersion solution has effect of removing both the swelling resin and the uncrosslinked monomers in the resin. We studied the effects of treatment with immersion solutions consisting of methanol and triply distilled water at different mass ratio on the solution absorbing performance of SAR, and determined an optimal composition of the immersion solution. Dried gel particles of gel copolymer synthesized by irradiation are placed in an immersion solution with ratio of the dried gel particles to the immersion solution at 1:40, and subjected to post-irradiation treatment processes such as immersing, swelling, freezing and lyophilization, and then solution absorbing performance of SAR is detected. The results are listed in Table 2.

Table 2 Effects of immersion solutions (having different component ratios) on solution absorbing performance of SAR (n=5, $\bar{x}\pm$s)

| No. | Groups (methanol: triply distilled water) | Solution absorbing ratio in triply distilled water | Solution absorbing ratio in normal saline solution | Solution absorbing rate (s) |
|---|---|---|---|---|
| 1 | a group treated with a 5:5 immersion solution and lyophilized | 624.6±22.5 | 59.8±0.6 | 17.3±2.9 |
| 2 | a group treated with a 3:7 immersion solution and lyophilized | 360.6±10.6** | 51.5±2.5** | 20.2±107 |
| 3 | a group treated with a 7:3 immersion solution and lyophilized | 442.5±14.4** | 59.7±3.16 | 18.6±2.0 |
| 4 | a group treated with a 1:9 immersion solution and lyophilized | 320.9±10.0** | 48.2±0.9** | 19.3±1.2 |

The results in Table 2 show the first group of resin is significantly higher than the second, third and fourth groups of resin in solution absorbing ratio in triply distilled water, and is significantly higher than the second and fourth groups of resin in solution absorbing ratio in normal saline solution ($P<0.01$); there is no significant statistical difference in solution absorbing rate among the groups ($P>0.05$). The above results demonstrate that treatment with an immersion solution consisting of methanol and triply distilled water at a mass ratio of 5:5 can improve solution absorbing performance of SAR very significantly.

2. Effects of immersion cleaning and lyophilization on solution absorbing performance of SAR

Gel copolymer solid particles synthesized by irradiation are immersed in an immersion solution, and dried, or frozen and lyophilized, and effects of immersion cleaning, oven drying and lyophilization on solution absorbing performance of SAR is observed. The results are listed in table 3.

Table 3 Effects of immersion cleaning and lyophilization on solution absorbing performance of SAR (n=5, $\bar{x}\pm$s)

| No. | Groups | Solution absorbing ratio in triply distilled water (g/g) | Solution absorbing ratio in normal saline solution (gig) | Solution absorbing rate (s) |
|---|---|---|---|---|
| 1 | A group dried without treatment with an immersion solution | 32.1±9.6 | 43.4±0.9 | 34.2±2.4 |
| 2 | A group treated with a 5:5 immersion solution and dried | 430.8±11.2* | 44.2±2.4 | 30.2±1.8 |
| 3 | A group treated with a 5:5 immersion solution and lyophilized | 624.6±22.5**## | 59.8±0.6**## | 17.3±2.9**## |
| Note: compared with the first group, * represents $P<0.05$; ** represents $P<0.01$; | | | | |

Compared with the second group, # represents $P<0.05$; ## represents $P<0.01$.

As shown in Table 3, as compared with the first group of SAR that is not immersed, the second group of SAR immersed is improved in solution absorbing ratio in triply distilled water ($P<0.05$), which demonstrates removal of uncrosslinked monomers can significantly improve solution absorbing capability of resin in triply distilled water; as compared with the second group of SAR that is immersed and dried, the third group of SAR that is immersed and lyophilized is significantly improved in terms of solution absorbing ratio in triply distilled water, solution absorbing ratio and rate in normal saline solution (*P*<0.01), which demonstrates freezing and lyophilization has very significant effect in improve solution absorbing performance of SAR. Freezing and lyophilization can increase pore size of the three-dimensional network of swelled resin. With expansion of the network structure, water absorbing ratio and solution absorbing ratio are increased, and solution absorbing rate is increased significantly. As compared with the first group of SAR that is dried without immersion cleaning, the third group of SAR that is immersed, frozen and lyophilized is improved by 1.9 times in solution absorbing ratio in triply distilled water, improved by 1.4 times in solution absorbing ratio in normal saline solution, and improved by 2.0 times in solution absorbing rate, and all have very significant statistical difference (*P*<0.01).

**VI.** Comparison in physical and chemical properties between Soochow University SAR (the SAR prepared according to the present invention) and famous SAR products in and out of China

According to the ISO17910-2001 standard, we tested the physical and chemical properties of the SAR prepared according to the present invention (also referred to as Soochow University SAR) and famous SAR products in and out of China. The results are listed in table 4.

Table 4 Comparison in physical and chemical properties between the Soochow University SAR and famous SAR products in and out of China (n=5, $\bar{x}\pm s$)

| SAR products | pH | Solution absorbing ratio in triply distilled water (g/g) | Solution absorbing ratio in normal saline solution (g/g) | Solution absorbing rate (s) | centrifugal solution retention capability (g/g) |
|---|---|---|---|---|---|
| S00CHOW University | 6.3±0.1 | 624.6±22.5 | 59,8±0.6 | 17.3±2.9 | 53.5±4.8 |
| Sanyo Kasei | 6.2±0.01 | 357.7±9.7** | 58.5±1.5 | 42.7±2.3** | 56.8±1,2 |
| San-Dia | 6.0±0.1 | 320.0±9.0** | 53.1±2.8* | 144.0±6.2** | 52.1±3.2 |
| Kolon, South Korea | 5.4±0.1* | 359.3±5,0** | 53.6±3.7* | 29.3±0.8** | 31.3±1.3** |
| Wei S00CHOW University | 6.0±0.3 | 502.0±14.6* | 48.8±2.3* | 32.0±2.4** | 41.8±1.6* |
| Haining | 5.8±0.1 | 557.3±4.6** | 57.3±5.2 | 53.7±3.2** | 50.6±3,1 |
| Hangzhou | 5.4±0.2* | 326.0±6.7** | 47.3±1.1* | 33.0±0.8** | 33.9±2.2** |
| Guangdong | 5.2±0.2* | 344.8±5.0** | 46.5±1.7* | 39.3±7.1** | 44.3±1.5* |

Note: compared with the Soochow University SAR, * represents *P*<0.05, ** represents *P*<0.01.

As shown in Table 4, the SAR prepared in the present invention is superior to famous SAR products in and out of China very significantly in the solution absorbing rate and the solution absorbing capacity in triply distilled water (*P*<0.01), being at the advanced level in the world; and the pH value, the solution absorbing capability in normal saline solution and the centrifugal solution retention capability thereof have no significant statistical difference as compared with the international famous product, i.e. the resin produced by Sanyo Kasei in Japan (*P*>0.05), being at the advanced level in the world.

WEI Zhaoyang in Soochow University developed PAAS/PVA SAR (WEI Zhaoyang, LU Zukun; YUE Ling, LI Li, YANG Shuqin, YANG Zhanshan*, Suzhou University Journal of Medical Science, 32(5): 661-664, 2012, * represents corresponding author), which is abbreviated as Wei, Soochow University. The resin is different from the present invention in composition and preparation process, and its solution absorbing ability and rate and other performances all are lower than the SAR of the present invention.

VII Biocompatibility Test

Health and Environmental Technology Institute of Soochow University, a provincial-grade organism, has tested the SAR of the present invention, according to the standard of ISO10993-5(2009). The SAR of the present invention does not have acute toxicity, cytotoxicity, allergenicity or skin irritation, has good biocompatibility, and can be safely used.

**Example 4**

Preparation of irradiated PVA/PAAS/AMPS copolymer:

(1) PVA is chemically pure, and has a polymerization degree of 2400 and a saponification degree of 98%; PAAS is analytically pure, and has a molecular weight of $4\times10^3$ ; and AMMS is chemically pure, and has a molecular weight of 207.25.

Material preparation: PVA accounts for 3 wt%, PAAS accounts for 25 wt%, AMPS accounts for 8 wt%, and triply distilled water accounts for 64 wt%.

The above mixture solution is mixed uniformly, placed in an autoclave, heated to 110°C and dissolved for 2 h to obtain a uniform and transparent solution.

(2) The uniform solution is poured quantitatively into a smooth plate-like mold with thickness of the solution at 10 mm. The mold is made of aluminum alloy, and its size is determined dependent on electron beam irradiation width.

(3) The solution in mold is irradiated with an electron accelerator under following conditions: energy of 0.8 MeV, a current of 2 mA, and a total absorbed dose of 40 kGy. By crosslinking and grafting under electron beam irradiation, a new gel-like PVA/PAAS/AMPS copolymer is synthesized.

Post-irradiation treatment processes and methods:

(4) drying, pulverizing and sieving:

The PVA/PAAS/AMPS copolymer synthesized under irradiation is placed in an electric oven, dried at 40°C for 48 h to obtain a dried gel. The dried gel is placed in a pulverizer, pulverized at a rotation speed of 2600 r/min for 28 s, and sieved with an oscillating sieving machine to obtain 40 to 100 mesh resin particles.

(5) Immersion cleaning and swelling: an immersion solution consisting of methanol and triply distilled water at a mass ratio of 7:3 is prepared. Resin particles is placed in the immersion solution with mass ratio of the resin particles to the immersion solution at 1:40, immersed and swelled at room temperature for 6 h so as to remove uncrosslinked monomers and fully swell the resin particles.

(6) Freezing and lyophilization: the immersed and swelled resin particles is filtered to remove redundant liquid, frozen at -80°C in a low-temperature refrigerator for 3 h, and then lyophilized under vacuum using a lyophilizer for 50 h, with a cold well temperature of -55°C to obtain a PVA/PAAS/AMPS SAR product. The product is packaged in a moisture-proof manner for use.

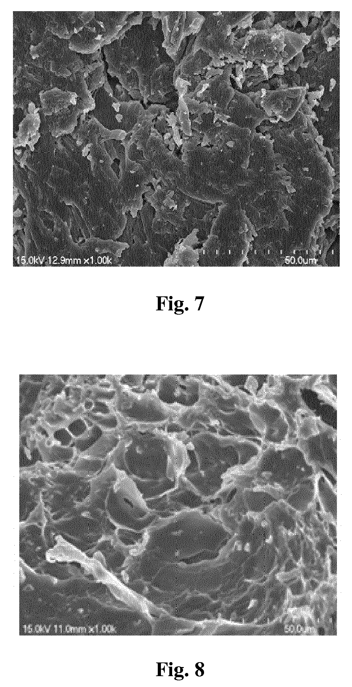

Fine structure of the obtained SAR subjected to post-treatment processes and SAR not subjected to post-treatment processes is observed according to the method described above. The results are shown in figure 7 and figure 8, respectively. As shown in figure 7 and figure 8, post-treatment processes such as immersion cleaning, swelling and lyophilization can increase pores in SAR and loosen three-dimensional network structure.

In summary, the SAR of the present invention has achieved the level of international famous product such as the SAR product produced by Sanyo-Kasei in Japan, in terms of pH value, and solution absorbing capacity and retention capability in normal saline solution, and solution absorbing rate and solution absorbing capability in triply distilled water thereof are significantly superior to international famous SAR products in and out of China (P<0.01), being at the advanced level in the world; the SAR of the present invention does not have acute toxicity, cytotoxicity, allergenicity or skin irritation, has good biocompatibility, and can be safely used. Therefore, the super absorbent resin can be widely applied in the fields of medical and hygienical products such as urinary incontinence mattress, diapers for infants, and women sanitary towels, and water and moisture retention in agriculture and forestry, and therefore has great application and development values.

For those skilled in the art, apparently the present invention is not limited to the details of the above examples, and the present invention can be carried out in other particular forms in case of not deviating from the essence or basic features of the present invention. Consequently, from either point of view, the examples shall be regarded as being exemplary and nonrestrictive. Scope of the present invention is defined by the claims attached rather than the aforementioned description, and therefore all variations falling within the meaning and scope of elements equivalent to the claims are embraced in the present invention.

In addition, it should be understood that, although the present specification makes description by means of embodiments, it is not that each embodiment only comprises one independent technical solution, and such describing manner of the specification is merely for clear expression. Those skilled in the art should take the specification as a whole, and the technical solutions in the embodiments can be combined appropriately to form other embodiments understandable by those skilled in the art.

**Claims**

1. A super absorbent resin having high solution absorbing rate, **characterized in that**, the super absorbent resin is a copolymer formed from an aqueous solution of a mixture of polymer(s) and monomer(s) by irradiation crosslinking and grafting;
   the aqueous solution of a mixture of polymer(s) and monomer(s) comprises, in mass percentage:

   2-10wt% of polyvinyl alcohol;
   18-26wt% of sodium polyacrylate;
   3-9wt% of 2-acrylamido-2-methylpropanesulfonic acid, and
   55-77wt% of water;
   wherein the polyvinyl alcohol has a polymerization degree of 1700-2400; and
   the sodium polyacrylate has a molecular weight of $2\times10^3$ - $5\times10^3$.

2. The super absorbent resin according to claim 1, **characterized in that**, the aqueous solution of a mixture of polymer(s) and monomer(s) comprises:

   2 wt% of polyvinyl alcohol;
   26 wt% of sodium polyacrylate;
   9 wt% of 2-acrylamido-2-methylpropanesulfonic acid, and
   63 wt% of water.

3. A method of preparing the super absorbent resin having high solution absorbing rate according to claim 1, comprising the following steps:

   A) mixing polyvinyl alcohol, sodium polyacrylate, 2-acrylamido-2-methylpropanesulfonic acid and water according to the above mass percentage to obtain an aqueous solution of a mixture of polymer(s) and monomer(s); and
   B) irradiating the aqueous solution of a mixture of polymer(s) and monomer(s) with an electron beam for crosslinking and grafting to give a gel-like copolymer.

4. The preparation method according to claim 3, **characterized by** further comprising the following steps:

   C) subjecting the gel-like copolymer to oven drying, pulverization, sieving, immersion cleaning, swelling, freezing and lyophilization in sequence to obtain a lyophilized super absorbent resin product;

   wherein the oven drying refers to a step wherein the gel-like copolymer is placed in an electric oven, and dried at 40°C to 50°C for 24-48 h to obtain a dried gel;
   the pulverization refers to a step wherein the dried gel is placed in a pulverizer, and pulverized at a rotation speed of 2500 to 3000 r/min for 25 to 30s to obtain particles; and
   the sieving refers to a step wherein the particles are sieved with an oscillating sieving machine to obtain 40 to 100 mesh resin particles.

5. The preparation method according to claim 4, **characterized in that**, in the step C), the immersion cleaning and the swelling are in a step wherein the resin particles are placed in an immersion solution to perform room-temperature immersion cleaning and swelling for 6-8 h to obtain swelled resin particles; and
   the mass ratio of the resin particles to the immersion solution is 1:30 to 1:40.

6. The preparation method according to claim 5, **characterized in that**, the immersion solution consists of methanol and triply distilled water at a mass ratio of 1:9 to 7:3.

7. The preparation method according to claim 5, **characterized in that**, in the step C), the freezing refers to filtering off redundant liquid from the swelled resin particles, freezing the resin particles at -100°C to -80°C in a low-temperature refrigerator for 2-3 h to obtain frozen resin particles; and
   the lyophilization refers to lyophilizing the frozen resin particles under vacuum using a lyophilizer for 48 to 72 h, with a cold well temperature of -60°C to -50°C to obtain a lyophilized super absorbent resin.

8. The preparation method according to any of claims 3 to 7, **characterized in that**, in the step A), the materials are placed in an autoclave after mixing, heated to 110°C to 120°C, and kept for 1 to 2 h for dissolving to obtain an aqueous solution of a mixture of polymer(s) and monomer(s).

9. The preparation method according to any of claims 3 to 7, **characterized in that**, in the step B), the aqueous solution of a mixture of polymer(s) and monomer(s) is quantitatively poured into a smooth plate-like mold prior to crosslinking and grafting, with thickness of the solution at 1 to 15 mm.

10. The preparation method according to claim 9, **characterized in that**, during crosslinking and grafting in the step B), the energy for the electron beam irradiation is 0.8 to 2.45 MeV, the current is 2 to 14 mA, and the total absorbed dose is 30 to 60 kGy.

**Fig. 1**

**Fig. 2**

**Fig. 3**

AA  swelling degree in triply distilled water
BB  swelling degree in normal saline solution

**Fig. 4**

AA  swelling degree in triply distilled water
BB  swelling degree in normal saline solution

**Fig. 5**

AA  swelling degree in triply distilled water
BB  swelling degree in normal saline solution

**Fig. 6**

**Fig. 7**

**Fig. 8**

# INTERNATIONAL SEARCH REPORT

| International application No. |
|---|
| **PCT/CN2014/080963** |

## A. CLASSIFICATION OF SUBJECT MATTER

C08F 265/02 (2006.01) i; C08F 261/04 (2006.01) i; C08F 220/58 (2006.01) i

According to International Patent Classification (IPC) or to both national classification and IPC

## B. FIELDS SEARCHED

Minimum documentation searched (classification system followed by classification symbols)

C08F; C08L; C08J

Documentation searched other than minimum documentation to the extent that such documents are included in the fields searched

Electronic data base consulted during the international search (name of data base and, where practicable, search terms used)

CPRSABS; SIPOABS; DWPI; WOTXT; EPTXT; USTXT; CJFD: WEI, Zhaoyang; LU, Zukun; YANG, Zhanshan; water absorption, PVA, acrylamide, amps, polyacrylate, PAAS, superabsorb+, super absorb+, +propanesulfonic acid, +propane sulfonic acid, polyvinyl alcohol, polyacryl+ sodium, crosslink+, radiat+, graft+

## C. DOCUMENTS CONSIDERED TO BE RELEVANT

| Category* | Citation of document, with indication, where appropriate, of the relevant passages | Relevant to claim No. |
|---|---|---|
| PX | CN 103360555 A (SOOCHOW UNIVERSITY), 23 October 2013 (23.10.2013), the whole document | 1-10 |
| A | CN 101293110 A (SOOCHOW UNIVERSITY), 29 October 2008 (29.10.2008), claim 1, and embodiment 1 | 1-10 |
| A | CN 101058660 A (JIANGNAN UNIVERSITY), 24 October 2007 (24.10.2007), claims | 1-10 |
| A | CN 102378778 A (NIPPON SHOKUBAI CO., LTD.), 14 March 2012 (14.03.2012), claims | 1-10 |
| A | WO 2013064648 A1 (AKZO NOBEL CHEMICALS INT BV), 10 May 2013 (10.05.2013), abstract | 1-10 |
| A | KR 20120013152 A (LG CHEMICAL LTD.), 14 February 2012 (14.02.2012), abstract | 1-10 |

☒ Further documents are listed in the continuation of Box C.      ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 August 2014 (04.08.2014) | **17 September 2014 (17.09.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **CAO, Minfang** Telephone No.: (86-10) **62084460** |
|---|---|

Form PCT/ISA/210 (second sheet) (July 2009)

## INTERNATIONAL SEARCH REPORT

International application No.

**PCT/CN2014/080963**

**C (Continuation).      DOCUMENTS CONSIDERED TO BE RELEVANT**

| Category* | Citation of document, with indication, where appropriate, of the relevant passages | Relevant to claim No. |
|---|---|---|
| A | TW 200736320 (FORMOSA PLASTICS CORP.), 01 October 2007 (01.10.2007), abstract | 1-10 |

Form PCT/ISA/210 (continuation of second sheet) (July 2009)

## INTERNATIONAL SEARCH REPORT
Information on patent family members

International application No.

**PCT/CN2014/080963**

| Patent Documents referred in the Report | Publication Date | Patent Family | Publication Date |
|---|---|---|---|
| CN 103360555 A | 23 October 2013 | None | |
| CN 101293110 A | 29 October 2008 | US 2009297587 A1 | 03 December 2009 |
| | | CN 101293110 B | 23 October 2013 |
| CN 101058660 A | 24 October 2007 | CN 100487043 C | 13 May 2009 |
| CN 102378778 A | 14 March 2012 | WO 2010114058 A1 | 07 October 2010 |
| | | EP 2415822 A1 | 08 February 2012 |
| | | US 012016084 A1 | 19 January 2012 |
| WO 2013064648 A1 | 10 May 2013 | CN 103889395 A | 25 June 2014 |
| KR 20120013152 A | 14 February 2012 | None | |
| TW 318225 B | 11 December 2009 | TWI 318225 B | 11 December 2009 |

Form PCT/ISA/210 (patent family annex) (July 2009)

# EP 3 029 080 A1

## REFERENCES CITED IN THE DESCRIPTION

**Patent documents cited in the description**

- CN 201310329272

**Non-patent literature cited in the description**

- **WEI ZHAOYANG ; LU ZUKUN ; YUE LING ; LI LI ; YANG SHUQIN ; YANG ZHANSHAN.** *Suzhou University Journal of Medical Science,* 2012, vol. 32 (5), 661-664